# EUROPÄISCHE PATENTSCHRIFT

(11) **EP 1 004 433 B1**
(45) Veröffentlichungstag und Bekanntmachung des Hinweises auf die Patenterteilung: **22.03.2006**
(21) Anmeldenummer: 99120098.1
(22) Anmeldetag: 21.10.1999
(51) Int. Cl.: B32B 17/10, F41H 5/04, C03C 27/12

(54) **Panzerglasscheibe zur Verwendung als Windschutzscheibe eines Kraftfahrzeugs**
Armoured glass for using as a windscreen for an automotive vehicle
Vitre blindée utilisée comme pare-brise pour un véhicule à moteur

(30) Priorität: 27.11.1998 DE 29818858 U
(43) Veröffentlichungstag der Anmeldung: 31.05.2000
(73) Patentinhaber: Isoclima GmbH, 81377 München (DE)
(72) Erfinder: Stranner, Siegfried, 81377 München (DE); Wöll, Herwig, 74343 Sachsenheim (DE)
(74) Vertreter: Seitz, Ralf Hans Frank

(56) Entgegenhaltungen:
- DE-A- 4 415 879
- DE-A- 19 745 248
- US-A- 2 401 552
- US-A- 2 697 675
- US-A- 4 046 951

## Beschreibung

Die vorliegende Erfindung betrifft eine Panzerglasscheibe oder Verbundsicherheitsscheibe, insbesondere zur Verwendung als Frontscheibe oder Windschutzscheibe eines Kraftfahrzeugs, die in einem Rahmen des Kraftfahrzeugs gehaltert ist, gemäß dem Oberbegriff von Anspruch 1.

Die US 2,697,675 beschreibt eine Sicherheitsscheibe mit einer äußeren Glasscheibe, die über eine innere Glasscheibe vorragt, wodurch eine Abstufung der Sicherheitsscheibe ausgebildet wird. Zwischen den beiden Glasscheiben ist eine Zwischenschicht aus nicht-sprödem thermoplastischem Material vorgesehen, die auch die Innenseite der vorstehenden Glasscheibe abdeckt, um einen flexiblen oder komprimierbaren Flansch zum Festklemmen der Sicherheitsscheibe in einem Flugzeug ausbilden zu können. Im Bereich der randseitigen Abstufung der Sicherheitsscheibe ist eine Trennschicht zwischen der Innenseite der Glasscheibe und der Zwischenschicht angeordnet, die das Glas dort von der Zwischenschicht trennt, was gleichbedeutend mit einem fehlenden Verbund zwischen der Glasscheibe und der Zwischenschicht in den Flächenbereichen der Abstufung ist.

Die US 2,401,552 beschreibt eine transparente Fensterscheibe mit mehreren Glasscheiben, die randseitig alle zueinander bündig sind, und einem randseitigen Flansch aus Kunststoff, der zum Festschrauben der Fensterscheibe an einer Wand eines Flugzeugs dient.

In der DE 195 39 607 A1 ist eine Panzerglasscheibe für ein Kraftfahrzeug beschrieben. Die bekannte Panzerglasscheibe ist als Verbundscheibe aus mehreren Glasschichten oder Glasscheiben, insgesamt acht, hergestellt, wobei eine der Glasscheiben mit ihrem Umfangsrand die anderen Glasscheiben randumseitig an der Panzerglasscheibe überragt und damit einen Vorsprung ausbildet. Zwischen den deckungsgleichen Oberflächen der Glasscheiben befinden sich Verbindungsschichten, die aus Polycarbonat-Folie bestehen und die Glasscheiben miteinander verbinden. Die Panzerglasscheibe ist am Vorsprung bzw. überragenden Abschnitt der vorragenden Glasscheibe in einem Fensterrahmen der Fahrzeugkarosserie gehaltert, wobei die Halterung an den Glasflächen des Vorsprungs ansetzt. In Richtung des Fahrzeuginnenraums hat die bekannte Panzerglasscheibe von dem vorragenden Abschnitt zu den stirnseitigen Flächen der nachangeordneten Glasscheiben eine Abstufung. Es hat sich nun bei praktischen Tests, insbesondere Crashtests, herausgestellt, daß es im Bereich des vorragenden Abschnittes zu Glasabsplitterungen in das Fahrzeuginnere kommen kann, die ein Verletzungspotential für die Fahrzeuginsassen darstellen.

Aufgabe der Erfindung ist es deshalb, eine Panzerglasscheibe anzugeben, bei der Glassplitter im Bereich des vorragenden Abschnitts nicht mehr in das Fahrzeuginnere eindringen können.

Diese Aufgabe wird durch die Panzerglasscheibe gemäß Anspruch 1 bzw. durch das Herstellungsverfahren nach Anspruch 5 gelöst. Demnach umfaßt die erfindungsgemäße Panzerglasscheibe oder Sicherheitsscheibe, die insbesondere zur Verwendung als Frontscheibe eines Kraftfahrzeugs ausgelegt ist und in einem Rahmen angebracht werden kann, mehrere geschichtete Glasscheiben im Verbund, von denen mindestens eine Glasscheibe mit einem vorragenden Abschnitt innerhalb eines Randbereichs der Panzerglasscheibe über die andere(n) Glasscheibe(n) hinaus vorragt, um eine Abstufung der Panzerglasscheibe von dem vorragenden Abschnitt zu der (den) anderen Glasscheibe(n) in Richtung zu einer Innenseite der Panzerglasscheibe hin auszubilden, wobei die Panzerglasscheibe mit dem vorragenden Abschnitt der mindestens einen Glasscheibe an dem Rahmen angebracht ist und eine Fassung hat, die splitterabhaltend ist und aus einer laminatartigen Schichtenfolge mit mindestens zwei Schichten aus Kunststoff ausgebildet ist, die einen Verbund mit dem Glas im Bereich der Abstufung ausbildet, wobei eine Schicht der Schichtenfolge, die die Oberfläche der Abstufung berührt, aus Polyurethan (PU), Polyvinylbutyral (PVB), Ethylenvinylacetat (EVA) oder Polyethylenterephtalat (PET) besteht und eine innere, freiliegende Schicht aus Polycarbonat trägt.

Die splitterabhaltende Fassung aus Kunststoff mit Polycarbonat und z.B. Polyurethan verhindert sicher, daß die bei einer mechanischen Krafteinwirkung auch im Randbereich bzw. im abgestuften Bereich der Panzerglasscheibe auftretenden Glassplitter die Fassung durchdringen oder durchschlagen können. Im Falle der Verwendung der erfindungsgemäßen Panzerglasscheibe als Windschutzscheibe bedeutet dies, daß die Glassplitter durch die Fassung aus Kunststoff nicht in den Fahrzeuginnenraum gelangen können und dadurch die Fahrzeuginsassen auch bei Bruch oder Bersten der Scheibe im Randbereich sicher vor Glassplittern sind. Die vorliegende Erfindung hat folglich den erheblichen Vorteil, die Fahrzeuginsassen sicher vor Verletzungen aufgrund von nach innen gerichteter Glas-Absplitterung zu schützen.

Die Fassung der Panzerglasscheibe der Erfindung hat eine Kunststoffschicht aus Polycarbonat (PC) und eine Kunststoffschicht aus Polyurethan (PU), Polyvinylbutyral (PVB), Ethylenvinylacetat (EVA) oder Polyethylenterephthalat (PET).

Durch die mehrschichtige Struktur der Fassung kann die Verbindung der Fassung mit dem Glas verbessert und somit die Standzeit der Fassung verlängert werden.

Vorzugsweise wird die Fassung zweischichtig ausgelegt, wobei die die Oberfläche der Abstufung berührende Schicht aus Polyurethan besteht, die eine Schicht aus Polycarbonat trägt. Das Polyurethan stellt dabei einen sicheren Verbund zwischen der Glasoberfläche des vorragenden Abschnitts und der Polycarbonatschicht oder der Polycarbonatfolie her.

Die Fassung erstreckt sich bevorzugt an der Teilfläche der Oberfläche der Abstufung, die sich parallel zur Innenseite der Panzerglasscheibe erstreckt, um eine aufwandsparende Herstellung der Fassung zu ermöglichen.

Die Fassung oder Schutzschicht kann sich stirnseitig über die mindestens eine vorragende Glasscheibe hinaus abstehend erstrecken. Dies ist insbesondere dann von Vorteil, wenn die Aufnahme des Karosserierahmens derart ausgelegt ist, daß bei im Rahmen gehalterter Panzerglasscheibe noch Zwischenräume im Rahmen verbleiben, durch die ansonsten Splitter in das Fahrzeuginnere gelangen könnten. Durch die vom Rand oder Vorsprung der Panzerglasscheibe hervorstehende Fassung können diese Zwischenräume verschlossen oder blockiert werden, um einen Durchgang von Splittern bei z.B. einem Unfall in das Fahrzeuginnere zu vermeiden.

Die Fassung kann hierzu eine abstehende Lippe oder Nase haben, die im Bereich der Abstufung die Panzerglasscheibe zumindest teilweise umsäumt. Die Lippe kann einfach hergestellt werden, indem z.B. bei der Herstellung einer ebenen Schichtfolge aus Polyurethan und Polycarbonat als Fassung die Schichtfolge über den Rand der Scheibe hinaus hergestellt wird. Die Lippe kann biegbar und/oder elastisch ausgebildet und ausgelegt sein.

Die Erfindung betrifft auch ein Verfahren zur Herstellung einer Panzerglasscheibe, wobei folgende Schritte ausgeführt werden:
auf eine innere Oberfläche einer äußeren Glasscheibe wird eine Polyurethanfolie derart aufgelegt und ausgerichtet, dass die aufgelegte Polyurethanfolie die gesamte innenseitige Oberfläche der Glasscheibe als durchgehende Polyurethanschicht abdeckt;
eine innere Glasscheibe wird dann auf die Polyurethanfolie aufgelegt und derart ausgerichtet, dass die äußere Glasscheibe mit einem vorragenden Abschnitt im Randbereich über die innere Glasscheibe hinausragt, um im Randbereich der zu fertigenden Panzerglasscheibe eine gleichmäßig umlaufende Abstufung zu erzeugen;
auf die randseitig umlaufende, freiliegende Oberfläche der Polyurethanfolie wird nun ein zuvor aus einer Polycarbonatfolie ausgestanzter oder ausgeschnittener Polycarbonat-Rahmen als Polycarbonatschicht in der Abstufung auf die Polyurethanfolie aufgelegt, wobei die Breite des Polycarbonat-Rahmens der Breite der rahmenartig freiliegenden Polyurethanfolie entspricht und diese durch den Polycarbonat-Rahmen abgedeckt wird;
aus der so präparierten Sandwichstruktur wird anschließend unter Erwärmung und Verpressung in einem Vorverbundofen ein Vorverbund mit partiell plastifizierten Folien hergestellt;
die so vorbehandelte Sandwichstruktur wird dann in einen Autoklaven verbracht, in dem bei einem genau definierten Druck- und Temperaturzyklus die Einzelkomponenten der vorbehandelten Sandwichstruktur miteinander verbunden werden; auf die freiliegende Oberfläche der inneren Glasscheibe wird dann eine Polyurethanfolie als Polyurethanschicht aufgelegt und ausgerichtet;
auf diese ausgerichtete Polyurethanfolie wird anschließend eine flächendeckende Polycarbonatfolie als Polycarbonatschicht aufgelegt, wobei diese Schichtfolge aus Polyurethan- und Polycarbonatfolie die freiliegende, innere Oberfläche der inneren Glasscheibe vollständig abdeckt;
an die noch freiliegenden Oberfläche der Stirnseite der inneren Glasscheibe wird nun ein umlaufender Streifen aus Polyurethan angelegt, der eine Versiegelungsschicht bildet die so zusammengesetzte Sandwichstruktur wird nun wieder in einem Vorverbundofen unter Erwärmung und Verpressung behandelt, um die zwischen der inneren Glasscheibe und der auf dieser aufgelegten Schichtenfolge aus Polyurethan und Polycarbonat Luft auszupressen und eine partielle Plastifizierung der Folien dieser Schichtenfolge zu erhalten; und
die so erhaltene Vorverbund-Scheibe wird anschließend wieder in einem Autoklaven behandelt, wobei wiederum der Druck- und Temperaturzyklus ausgeführt wird, um eine haltbare und feste Verbindung der gesamten Vorverbundscheibe zu erhalten.

Weitere vorteilhafte Weiterbildungen der vorliegenden Erfindung sind den Unteransprüchen zu entnehmen. Weitere Vorteile, vorteilhafte Weiterbildungen und Anwendungsmöglichkeiten der vorliegenden Erfindung sind aus der nachfolgenden Beschreibung von bevorzugten Ausführungsformen der Erfindung zu entnehmen. Es zeigen:
Figur 1 eine Teilansicht im Querschnitt einer ersten Ausführungsform der Panzerglasscheibe der Erfindung wobei die Halterung der Panzerglasscheibe im Rahmen angedeutet ist; und
Figur 2 eine zweite Ausführungsform der Panzerglasscheibe der Erfindung.

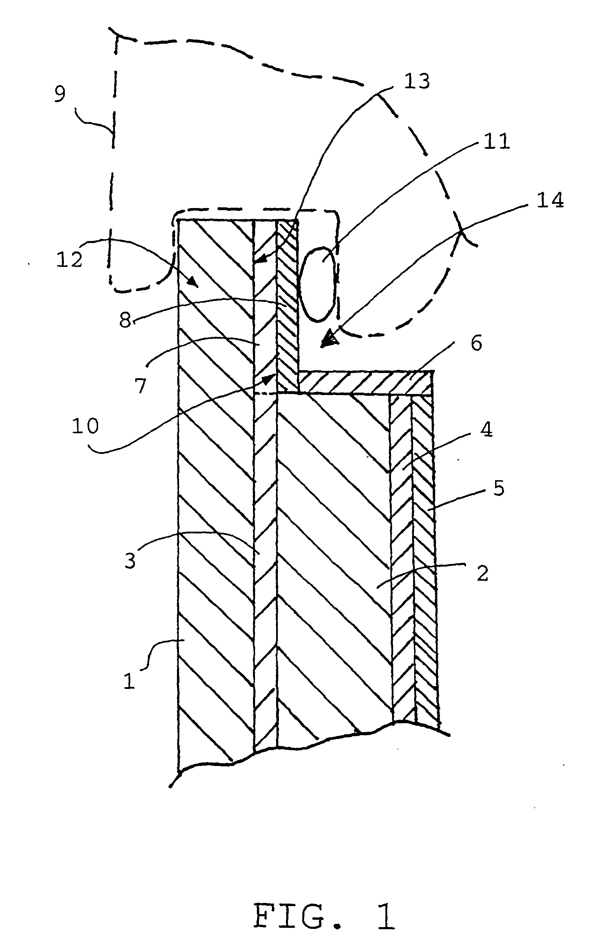

In der Figur 1 ist eine erste Ausführungsform der erfindungsgemäßen Panzerglasscheibe gezeigt, die als Verbundglasscheibe aufgebaut ist und mehrere schichtweise angeordnete Glasscheiben 1, 2, eine Verbundschicht 3 zwischen den beiden Glasscheiben 1, 2 und eine Schichtenfolge als Fassung 10 aus einer Polyurethanschicht 7 und einer Polycarbonatschicht 8 in einem Randbereich der erfindungsgemäßen Panzerglasscheibe aufweist. Nachfolgend wird der Aufbau der erfindungsgemäßen Panzerglasscheibe gemäß der Figur 1 genauer beispielhaft als Windschutzscheibe bzw. Frontscheibe eines Kraftfahrzeuges beschrieben. Die gezeigte Ausführungsform der erfindungsgemäßen Panzerglasscheibe kann jedoch z.B. auch als Heckscheibe eines Kraftfahrzeuges, als Sicherheitsscheibe in einem Flugzeug oder einem Schiff usw. verwendet werden.

Die bezüglich des Fahrzeuginnenraums außen liegende Glasscheibe 1 ist mit der bezüglich des Fahrzeuginnenraums innen liegende Glasscheibe 2 über eine Verbundschicht 3 aus Polyurethan oder Polyurethanfolie verbunden. Die äußere Glasscheibe 1 steht im Randbereich die gesamte Panzerglasscheibe umlaufend über die innere Glasscheibe 2 hinaus und bildet somit einen vorragenden Abschnitt 12 der erfindungsgemäßen Panzerglasscheibe. Mit diesem vorragenden Abschnitt 12 bzw. Vorsprung ist die Panzerglasscheibe in einem Rahmen 9 (in der Figur 1 gestrichelt angedeutet) der Fahrzeugkarosserie gehaltert bzw. mit einer Kleberraupe 11 eingeklebt, der durch die A-Säulen, den Dachquerholm und den unteren Querholm gebildet wird und eine umlaufende Aufnahme zum Aufnehmen des vorragenden Abschnitts 12 hat.

Auf der innenseitigen Oberfläche 13 des vorragenden Abschnitts 12 der äußeren Glasscheibe 1 innerhalb der randumlaufenden Abstufung 14 bzw. Kantenaussparung der gezeigten Panzerglasscheibe ist als Fassung 10 zum Schutz gegen Glasabsplitterung und Splittereintritt in das Fahrzeuginnere hinein eine Schichtenfolge aus einer Polyurethanschicht 7 und einer Polycarbonatschicht 8 ausgebildet, wobei die Polyurethanschicht 7 die innenseitige Glasoberfläche 13 berührt und die Polycarbonatschicht 8 trägt. Die Polyurethanschichten 3 und 7 bilden eine durchgehende Schicht und werden in einem Arbeitsgang hergestellt.

Die gegenüber der äußeren Glasscheibe 1 zurückgesetzte innere Glasscheibe 2 ist stirnseitig mit einer Versiegelungsschicht 6 aus Polyurethan versehen. Auf der inneren Oberfläche der Glasscheibe 2 ist ganzflächig eine Schichtenfolge mit einer Polyurethanschicht 4 und einer Polycarbonatschicht 5 aufgebracht, wobei sich die Polyurethanschicht 4 auf der inneren Oberfläche der Glasscheibe 2 befindet, während die Polycarbonatschicht 5 auf der Polyurethanschicht 4 ausgebildet ist.

Bei der Herstellung der Panzerglasscheibe der Erfindung gemäß der Figur 1 werden die Glasscheiben 1 und 2 auf einer Transportstrecke zunächst gewaschen und getrocknet. Anschließend wird eine Sandwichstruktur in einem staubfrei gehaltenen und klimatisierten Raum hergestellt. Dabei wird auf die äußere Glasscheibe 1 eine Polyurethanfolie mit einer Stärke von 1 mm - aus einem typischen Bereich für die Folienstärke zwischen ungefähr 0,3 mm bis 5 mm - manuell, halbautomatisch oder vollautomatisch auf die innere Oberfläche 13 der äußeren Glasscheibe 1 aufgelegt und ausgerichtet, so daß die aufgelegte Polyurethanfolie die gesamte innenseitige Oberfläche 13 der Glasscheibe 1 abdeckt, um die Polyurethanschichten 3 und 7 zu bilden. Anschließend wird die innere Glasscheibe 2 auf die Polyurethanschicht 3 aufgelegt und derart ausgerichtet, daß sich im Randbereich der zu fertigenden Panzerglasscheibe eine gleichmäßig umlaufende Abstufung 14 ergibt bzw. die äußere Glasscheibe 1 mit einem vorragenden Abschnitt 12 im Randbereich über die innere Glasscheibe 2 hinausragt. Auf die randseitig umlaufende freiliegende Oberfläche der Polyurethanfolie bzw. der Polyurethanschicht 7 wird nun ein zuvor aus einer Polycarbonatfolie ausgestanzter bzw. ausgeschnittener Polycarbonat-Rahmen in der Abstufung 14 auf die Polyurethschicht 7 aufgelegt, wobei die Breite des Polycarbonat-Rahmens der Breite der rahmenartig freiliegenden Polyurethanschicht 7 entspricht und diese durch den Polycarbonat-Rahmen abgedeckt wird. Die Schichtdicke des Polycarbonat-Rahmens oder -Streifens beträgt z.B. 1 mm. Für die Dicke der Polycarbonatschicht kann aber je nach Anwendung ein Wert aus dem Bereich zwischen etwa 0,5 mm bis 5 mm ausgewählt sein.

Aus der so präparierten Sandwichstruktur wird anschließend unter Erwärmung und Verpressung in einem sogenannten Vorverbundofen ein Vorverbund mit partiell plastifizierten Folien hergestellt. Bei der Vorbehandlung wird die eingeschlossene Luft aus der Sandwichstruktur fast vollständig herausgepreßt.

Anschließend wird die so vorbehandelte Sandwichstruktur in einen Autoklaven verbracht. In dem Autoklaven werden bei einem genau definierten Druck- und Temperaturzyklus die Einzelkomponenten der vorbehandelten Sandwichstruktur miteinander verbunden. Während des Autoklavenzyklus wird zunächst unter einem hohen Druck im Bereich von 12 bis 15 Bar, bevorzugt bei 14 Bar, das Autoklaveninnere auf eine Temperatur zwischen 120 und 150°C, bevorzugt 130°C, aufgeheizt. Sind die Sollwerte für Temperatur und Druck erreicht, so werden sie über eine gewisse Haltezeit im Autoklaven aufrecht erhalten. Anschließend wird dann zunächst die Temperatur und dann der Druck abgesenkt.

In einem nächsten Schritt wird auf die nun freiliegende Oberfläche der inneren Glasscheibe 2 eine Polyurethanfolie als Polyurethanschicht 4 aufgelegt und ausgerichtet und auf diese ausgerichtete Polyurethanfolie anschließend eine flächendekkende Polycarbonatfolie als Polycarbonatschicht 5 aufgelegt, wobei die Schichtfolge aus Polyurethan- und Polycarbonatfolie die freiliegende, innere Oberfläche der inneren Glasscheibe 2 vollständig abdeckt. An der noch freiliegenden Oberfläche der Stirnseite der inneren Glasscheibe 2 wird nun ein umlaufender Streifen aus Polyurethan angelegt, der die Versiegelungsschicht 6 bildet.

Die so zusammengesetzte Sandwichstruktur wird nun wieder in einem Vorverbundofen unter Erwärmung und Verpressung behandelt, um die zwischen der inneren Glasscheibe 2 und der auf dieser aufgelegten Schichtenfolge aus Polyurethan und Polycarbonat Luft fast vollständig auszupressen und eine partielle Plastifizierung der Folien der Schichtenfolge zu erhalten.

Die so erhaltene Vorverbund-Scheibe wird anschließend wieder in einem Autoklaven behandelt, wobei wiederum der vorstehend erläuterte Druck- und Temperaturzyklus ausgeführt wird, um eine haltbare und feste Verbindung der gesamten Vorverbundscheibe zu erhalten.

Bei der so hergestellten Panzerglasscheibe verhindert die umlaufende Polycarbonatschicht 8 im Randbereich der Panzerglasscheibe, daß bei einem Unfall oder Crashtest Glassplitter am Rand der Scheibe in das Innere des Fahrzeugs gelangen können.

Verfahren zur Herstellung von Verbundscheiben bzw. Panzerglasscheiben sind prinzipiell z.B. in der DE 197 45 160 A1 mit dem Titel "Verfahren und Vorrichtung zur Herstellung von Verbundsicherheitsglas" und in der Offenlegungsschrift DE 197 114 59 A1 mit dem Titel "Verfahren zur Herstellung einer gebogenen Verbundsicherheitsglasscheibe" erläutert, auf die ergänzend verwiesen wird.

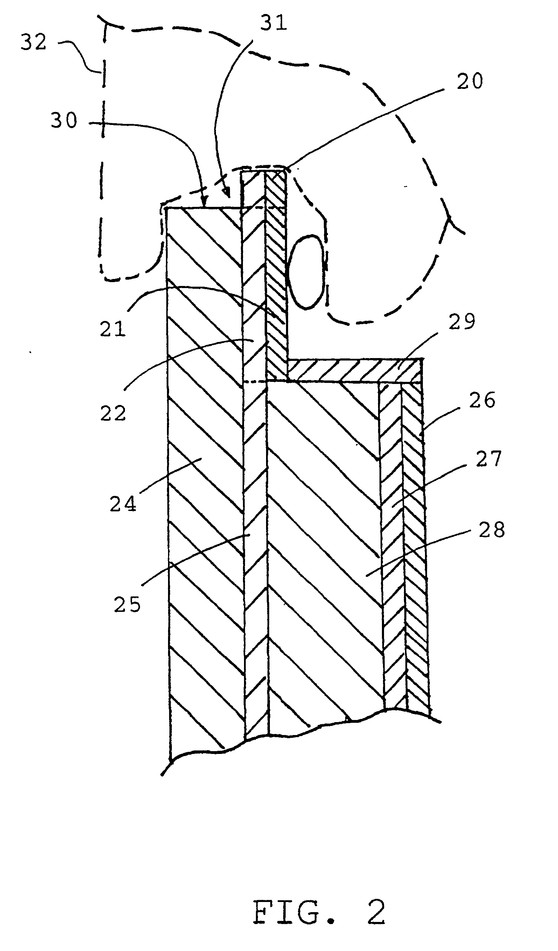

In der Figur 2 ist eine zweite Ausführungsform der erfindungsgemäßen Verbundglasscheibe gezeigt. Die gezeigte Panzerglasscheibe, die auch als Frontscheibe eines Kraftfahrzeugs verwendet werden kann, umfaßt die gleiche Schichtenfolge wie die zuvor erläuterte erste Ausführungsform gemäß Figur 1, nämlich eine äußere Glasscheibe 24, eine durchgängige Polyurethanschicht 25, eine innere Glasscheibe 28, eine Polyurethanschicht 27 und eine Polycarbonatschicht 26. Die Fassung besteht hier wiederum aus einer Polyurethanschicht 22 und einer Polycarbonatschicht 21, wobei die Polyurethanschichten 22 und 25 als eine Schicht hergestellt sind. Eine Versiegelungsschicht 29 ist hier auch vorhanden.

Der wesentliche Unterschied zur ersten Ausführungsform der Figur 1 besteht darin, daß die Schichtenfolge mit der Polyurethanschicht 22 und der Polycarbonatschicht 21, also die Fassung, über die Stirnseite 30 der äußeren Glasscheibe 24 hinaussteht, um eine die Panzerglasscheibe umsäumende Lippe 20 auszubilden. Bei einem Crash in einem Zwischenraum 31 des Rahmens 32 (gestrichelt in der Figur 2 angedeutet) anfallende Glassplitter, werden von der Lippe 20 sicher von einem Eintreten in den Fahrzeuginnenraum abgehalten.

Die Herstellung erfolgt mit den zuvor bezüglich der ersten Ausführungsform erläuterten Schritten. Die Lippe 20 wird jedoch bei den einzelnen Verfahrensschritten durch geeigneten Abstützeinrichtungen und Abstandshalter in ihrer vorgesehenen Lage gehalten.

In weiteren Ausführungsformen können statt zwei Glasscheiben wie in der ersten und der zweiten Ausführungsform drei und mehr Scheiben sandwichartig miteinander verbunden werden. Dabei können z.B. mindestens zwei zurückgesetzt, innere Glasscheiben und/oder mehrere, z.B. zwei, deckungsgleiche äußere Glasscheiben verwendet werden, die den vorragenden Abschnitt der Panzerglasscheibe ausbilden.

In einer weiteren Ausführungsform der Erfindung kann die Fassung, die z.B. aus der Schichtenfolge aus Polyurethan und Polycarbonat bestehen kann, die innenseitige Oberfläche der vorragenden Glasscheibe (vgl. 13 in Figur 1) und zusätzlich auch die Stirnseite der vorragenden Glasscheibe (vgl. 30 in Figur 2) vollständig oder teilweise abdecken. Diese stirnseitige Abdeckung bzw. Kunststoffschicht kann auch in Kombination mit der Lippe der Ausführungsform der Figur 2 ausgeführt sein.

## Patentansprüche

1. Panzerglasscheibe, insbesondere zur Verwendung als Windschutzscheibe eines Kraftfahrzeugs, wobei die Panzerglasscheibe mehrere geschichtete Glasscheiben (1,2; 24,28) im Verbund aufweist, von denen mindestens eine Glasscheibe (1; 24) mit einem vorragenden Abschnitt (12) innerhalb eines Randbereichs der Panzerglasscheibe über die andere(n) Glasscheibe(n) (2; 28) hinaus vorragt, um eine Abstufung (14) der Panzerglasscheibe von dem vorragenden Abschnitt zu der (den) anderen Glasscheibe(n) in Richtung zu einer Innenseite der Panzerglasscheibe hin auszubilden, wobei die Panzerglasscheibe mit dem vorragenden Abschnitt (12) der mindestens einen Glasscheibe (1; 24) an dem Rahmen (9; 32) angebracht ist und eine Fassung (10) hat,
**dadurch gekennzeichnet**
**dass** die Fassung splitterabhaltend ist und aus einer laminatartige Schichtenfolge mit mindestens zwei Schichten aus Kunststoff ausgebildet ist, die einen Verbund mit dem Glas im Bereich der Abstufung ausbildet, und
**dass** eine Schicht (7; 22) der Schichtenfolge, die die Oberfläche der Abstufung (14) berührt, aus Polyurethan (PU), Polyvinylbutyral (PVB), Ethylenvinylacetat (EVA) oder Polyethylenterephtalat (PET) besteht und eine innere, freiliegende Schicht (8; 21) aus Polycarbonat trägt.

2. Panzerglasscheibe nach Anspruch 1, **dadurch gekennzeichnet, dass** die Fassung (10) eine Teilfläche (13) der Oberfläche der Abstufung abdeckt, die sich parallel zur Innenseite der Panzerglasscheibe erstreckt.

3. Panzerglasscheibe nach Anspruch 1 oder Anspruch 2, **dadurch gekennzeichnet, dass** sich die Fassung stirnseitig über die mindestens eine hervorstehende Glasscheibe (24) hinaus abstehend erstreckt.

4. Panzerglasscheibe nach Anspruch 3, **dadurch gekennzeichnet, dass** die Fassung eine abstehende Lippe (20) hat, die im Bereich der Abstufung die Panzerglasscheibe zumindest teilweise umsäumt.

5. Verfahren zur Herstellung einer Panzerglasscheibe, wobei folgende Schritte ausgeführt werden:
auf eine innere Oberfläche (13) einer äußeren Glasscheibe (1) wird eine Polyurethanfolie derart aufgelegt und ausgerichtet, dass die aufgelegte Polyurethanfolie die gesamte innenseitige Oberfläche (13) der Glasscheibe (1) als durchgehende Polyurethanschicht (3, 7) abdeckt,
eine innere Glasscheibe (2) wird dann auf die Polyurethanfolie aufgelegt und derart ausgerichtet, dass die äußere Glasscheibe (1) mit einem vorragenden Abschnitt (12) im Randbereich über die innere Glasscheibe (2) hinausragt, um im Randbereich der zu fertigenden Panzerglasscheibe eine gleichmäßig umlaufende Abstufung (14) zu erzeugen;
auf die randseitig umlaufende, freiliegende Oberfläche der Polyurethanfolie wird nun ein zuvor aus einer Polycarbonatfolie ausgestanzter oder ausgeschnittener Polycarbonat-Rahmen als Polycarbonatschicht in der Abstufung (14) auf die Polyurethanfolie aufgelegt, wobei die Breite des Polycarbonat-Rahmens der Breite der rahmenartig freiliegenden Polyurethanfolie (7) entspricht und diese durch den Polycarbonat-Rahmen abgedeckt wird;
aus der so präparierten Sandwichstruktur wird anschließend unter Erwärmung und Verpressung in einem Vorverbundofen ein Vorverbund mit partiell plastifizierten Folien hergestellt; die so vorbehandelte Sandwichstruktur wird dann in einen Autoklaven verbracht, in dem bei einem genau definierten Druck- und Temperaturzyklus die Einzelkomponenten der vorbehandelten Sandwichstruktur miteinander verbunden werden; auf die freiliegende Oberfläche der inneren Glasscheibe (2) wird dann eine Polyurethanfolie als Polyurethanschicht (4) aufgelegt und ausgerichtet;
auf diese ausgerichtete Polyurethanfolie wird anschließend eine flächendeckende Polycarbonatfolie als Polycarbonatschicht (5) aufgelegt, wobei diese Schichtfolge aus Polyurethan- und Polycarbonatfolie die freiliegende, innere Oberfläche der inneren Glasscheibe (2) vollständig abdeckt;
an die noch freiliegenden Oberfläche der Stirnseite der inneren Glasscheibe (2) wird nun ein umlaufender Streifen aus Polyurethan angelegt, der eine Versiegelungsschicht (6) bildet;
die so zusammengesetzte Sandwichstruktur wird nun wieder in einem Vorverbundofen unter Erwärmung und Verpressung behandelt, um die zwischen der inneren Glasscheibe (2) und der auf dieser aufgelegten Schichtenfolge aus Polyurethan und Polycarbonat Luft auszupressen und eine partielle Plastifizierung der Folien dieser Schichtenfolge zu erhalten; und
die so erhaltene Vorverbund-Scheibe wird anschließend wieder in einem Autoklaven behandelt, wobei wiederum der Druck- und Temperaturzyklus ausgeführt wird, um eine haltbare und feste Verbindung der gesamten Vorverbundscheibe zu erhalten.

6. Verfahren nach Anspruch 5, **dadurch gekennzeichnet, dass** die Polyurethanfolie ungefähr 0,3 mm bis 5 mm, insbesondere 1 mm, dick ist.

7. Verfahren nach Anspruch 5 oder Anspruch 6, **dadurch gekennzeichnet, dass** der Polycarbonat-Rahmen eine Schichtdicke zwischen etwa 0,5 mm bis 5 mm, insbesondere 1 mm, hat.

8. Verfahren nach einem der Ansprüche 5 bis 7, **dadurch gekennzeichnet, dass** bei dem Autoklavenzyklus zunächst unter einem hohen Druck im Bereich von 12 bis 15 Bar, bevorzugt bei 14 Bar, das Autoklaveninnere auf eine Temperatur zwischen 120 und 150°C, bevorzugt 130°C, aufgeheizt wird.

9. Verfahren nach einem der Ansprüche 5 bis 8, **dadurch gekennzeichnet, dass** die Fassung als Schichtenfolge mit der Polyurethanschicht (22) zwischen der äußeren Glasscheibe und der inneren Glasscheibe und mit der Polycarbonatschicht (21) als Polycarbonat-Rahmen über eine Stirnseite (30) der äußeren Glasscheibe (24) hinaussteht, um eine die Panzerglasscheibe umsäumende Lippe (20) auszubilden, wobei die Lippe (20) bei den einzelnen Verfahrensschritten durch geeignete Abstützeinrichtungen und Abstandshalter in ihrer vorgesehenen Lage gehalten wird.

## Revendications

1. Vitre blindée, notamment pour être utilisée comme pare-brise d' un véhicule à moteur; la vitre blindé présentant plusieurs vitres (1, 2; 24, 28) recouvertes en composite, parmi lesquelles, au moins une vitre (1; 24) fait saillie au-dessus de l'autre (des autres) vitre (s) (2; 28) avec un tronçon (12) faisant saillie, à l'intérieur d'une zone de bord de la vitre blindée, afin de former un gradin (14), de la vitre blindée à partir du tronçon faisant saillie vers l'autre (les autres) vitre (s) blindée (s), en direction d'un côté intérieur de la vitre blindée; la vitre blindée étant fixée avec le tronçon (12) faisant saillie d'au moins une vitre blindée (1; 24) sur le cadre (9; 32) et ayant un support (10),
**caractérisé en ce que**,
le support protège contre les éclats et est formée d'une succession de couches stratifiées avec au moins deux couches en matière plastique qui forme un composite avec le verre dans la zone du gradin, et
**en ce qu'**une couche (7; 22) de la succession de couches qui touche la surface du gradin (14) est composée de Polyuréthane (PU), de Polyvinylbutyrale (PVB), d'éthylènevinylacétate (EVA) ou de Polyéthylènetéréphtalate(PET), et porte une couche (8; 21) intérieure, non recouverte en Polycarbonate.

2. Vitre blindée selon la revendication 1, **caractérisé en ce que** le support (10) recouvre une surface partielle (13) de la surface du gradin, qui s'étend de façon parallèle au côté intérieur de la vitre blindée.

3. Vitre blindée selon la revendication 1 ou selon la revendication 2, **caractérisée en ce que** le support s'étend en saillie du côté frontal sur au moins une vitre en verre (24) faisant saillie.

4. Vitre blindée selon la revendication 3, **caractérisée en ce que** le support a une lèvre (20) en saillie, qui entoure la vitre blindée au moins partiellement dans la zone du gradin.

5. Procédé pour la fabrication d'une vitre blindée, pendant lequel on réalise les étapes suivantes:
on dépose et on oriente sur une surface (13) intérieure d'une vitre en verre (1) extérieure, une feuille en polyuréthane de manière à ce que ladite feuille en polyuréthane recouvre la surface (13) totale intérieure de la vitre en verre (1) en tant que couche de polyuréthane (3, 7) continue,
une vitre en verre (2) intérieure est alors déposée et orientée sur la feuille en polyuréthane de manière à ce que la vitre en verre (1) extérieure fasse saillie avec un tronçon (12) en saillie, dans la zone de bord au-dessus de la vitre en verre (2) intérieure, afin de créer de façon régulière dans la zone de bord de la vitre blindée qui doit être fabriquée, un gradin (14) circonférentiel;
on dépose sur la surface circonférentielle non recouverte du côté du bord de la feuille en polyuréthane, un cadre polycarbonate estampé ou découpé auparavant dans une feuille en polycarbonate comme couche de polycarbonate dans le gradin (14); la largeur du cadre polycarbonate correspondant à la largeur de la feuille en polyuréthane (7) non recouverte en forme de cadre et ladite feuille en polyuréthane étant recouverte par le cadre polycarbonate; à partir de la structure en sandwich ainsi préparée, on fabrique ensuite un précomposite avec des feuilles partiellement plastifiées en chauffant et en comprimant dans un four de précomposite; la structure en sandwich ainsi prétraitée étant alors amenée dans un autoclave, dans lequel les différents composants de la structure en sandwich prétraitée sont reliés les uns aux autres par un cycle de pression et de température précisément défini; on applique et oriente alors une feuille de polyuréthane en tant que couche de polyuréthane (4) sur la surface non recouverte de la vitre en verre (2) intérieure;
sur cette feuille de polyuréthane orientée, on dispose alors une feuille de polycarbonate recouvrant la surface en tant que couche de polycarbonate (5); cette succession de couches en polyuréthane et en feuille de polycarbonate, recouvrant complètement la surface non recouverte, intérieure de la vitre en verre (2) intérieure;
sur la surface encore non recouverte du côté frontal de la vitre en verre (2) intérieure, on dispose une bande circonférentielle en polyuréthane qui forme une couche de scellement (6);
la structure en sandwich ainsi formée est alors traitée à nouveau dans un four de précomposite en chauffant et en comprimant pour chasser l'air contenu entre la vitre en verre (2) intérieure et la succession de couches, appliquée sur ladite vitre, en polyuréthane et polycarbonate et obtenir une plastification partielle des feuilles de cette succession de couches; et
la vitre précomposite ainsi obtenue est ensuite traitée à nouveau dans un autoclave; le cycle de pression et de température étant à nouveau effectué pour obtenir une liaison durable et résistante de toute la vitre précomposite.

6. Procédé selon la revendication 5, **caractérisé en ce que** la feuille en polyuréthane est épaisse d'environ 0,3 mm à 5 mm, notamment 1 mm.

7. Procédé selon la revendication 5 ou la revendication 6, **caractérisé en ce que** le cadre polycarbonate a une épaisseur de couche se situant entre environ 0,5 mm à 5 mm, notamment 1 mm.

8. Procédé selon une des revendications 5 à 7, **caractérisé en ce que**, dans le cas d'un cycle autoclave, d'abord sous une pression élevée se situant dans une zone de 12 à 15 bar, de préférence à 14 bar, l'intérieur de l'autoclave est chauffé à une température se situant entre 120 et 150 °C, de préférence 130°C.

9. Procédé selon une des revendications 5 à 8, **caractérisé en ce que** le support en tant que succession de couches avec la couche de polyuréthane (22) entre la vitre en verre extérieure et la vitre en verre intérieure et avec la couche en polycarbonate (21) en tant que cadre polycarbonate fait saillie au-dessus d'un côté frontal (30) de la vitre en verre (24), afin de former une lèvre (20) encerclant la vitre blindée; la lèvre (20) étant maintenue dans les différentes étapes du procédé, dans sa position prévue par des dispositifs de maintien et des écarteurs appropriés.

## Claims

1. Bulletproof glass window, in particular for use as a windscreen of a motor vehicle, the bulletproof glass window comprising several laminated glass panes (1,2; 24,28) in a compound, of which at least one glass pane (1; 24) juts out above the other glass pane(s) (2; 28) with a projecting section (12) within a marginal area of the bulletproof glass window to form a stepped portion (14) from the projecting section to the other glass pane(s) in the direction of the inner side of the bulletproof glass window; the bulletproof glass window with the projecting section (12) of the at least one glass pane (1; 24) is fixed to the frame (9; 32) and it has an edging (10),
**characterized in**
**that** the edging holds back glass splinters and it is formed by a laminated series of layers with at least two layers of synthetic material which forms a compound together with the glass in the area of the stepped portion, and
**that** the layer (7;22) of the series of layers which touches the surface of the stepped portion is made of polyurethane (PU), polyvinyl butyral (PVB), ethylene vinylacetate (EVA) or polyethyleneterephthalate (PET), and bears an inner, bare layer (8, 21) made of polycarbonate.

2. Bulletproof glass window according to claim 1, **characterized in that** the edging (10) extends onto the partial area (13) of the surface of the stepped portion, which extends parallel to the inner side of the bulletproof glass window.

3. Bulletproof glass window according to claim 1 or claim 2, **characterized in that** the face of the edging extends and thus sticks out beyond the at least one projecting glass pane (24).

4. Bulletproof glass window according to claim 3, **characterized in that** the edging has a protruding lip (20), which, in the area of the stepped portion, fringes the bulletproof glass window at least partially.

5. Method for producing of a bulletproof glass window, wherein the following steps are carried out:
a polyurethane film is put on and aligned over an inner surface (13) of an outer glass pane (1) in such a way that the applied polyurethane film covers the entire inner surface (13) to form a continuous polyurethane layer (3, 7);
afterwards, an inner glass pane (2) is laid on the polyurethane film and aligned in such a way that the outer glass pane (1) juts out in the marginal area over the inner glass pane (2) with a projecting portion (12) to form a uniform, circumferential stepped portion (14) in the marginal area of the bulletproof window to be produced;
on the bare surface of the polyurethane film, that runs circumferentially along the edge, a poly carbonate frame that had either previously been cut out of polycarbonate film or punched out of it, is now laid in the stepped portion (14) on the polyurethane film, the width of the frame-like polycarbonate film corresponding to the width of the bare frame-like polyurethane film (7), and this in turn being covered by the polycarbonate frame;
from the thus prepared sandwich structure a pre-laminate is subsequently produced with partial plasticized films by heating and pressing in a pre-laminate oven;
afterwards, the sandwich structure that has been pretreated in this way is placed in an autoclave in which the single components of the pre-treated sandwich structure are bonded together by precisely defined pressure and temperature cycles;
then, a polyurethane film, as polyurethane layer (4), is laid and aligned over the now bare surface of the inner glass pane (2);
onto this aligned polyurethane film, a polycarbonate film as polycarbonate layer (5) is laid over the entire area, the series of layers comprising polyurethane and polycarbonate film covering completely the bare inner surface of the inner glass pane (2);
on the surface of the face of the inner glass pane (2) that is still bare, a circumferential strip of polyurethane is laid that forms a sealing layer (6);
the thus prepared sandwich structure is now heated and pressed again in a pre-laminate oven in order to press out almost completely air that is between the inner glass pane (2) and the series of layers comprising polyurethane and polycarbonate that has been applied to it, and to obtain a partial plasticization of the films from this series of layers; and
the pre-laminated glass pane thus obtained is then treated again in an autoclave, the pressure and temperature cycle being carried out again in order to obtain a durable and firm joining of the whole pre-laminated glass pane.

6. Method according to claim 5, **characterized in that** the polyurethane film is between approximately 0.3 mm and 5 mm, in particular 1 mm, thick.

7. Method according to claim 5 or claim 6, **characterized in that** the thickness of the layer of the polycarbonate frame or strip is between approximately 0.5 mm and 5 mm, in particular 1 mm.

8. Method according to one of the claims 5 to 7, **characterized in that** during the autoclave cycle the interior of the autoclave is first heated to a temperature between 120 °C and 150 °C, preferably 130 °C, under pressure of 12 to 15 bar, preferably 14 bar.

9. Method according to one of the claims 5 to 8, **characterized in that** the edging which is the series of layers with the polyurethane layer (22) between the outer glass pane and the inner glass pane, and with the polycarbonate layer (21) as polycarbonate frame, extends beyond the face (30) of the outer glass pane (24) to form a circumferential lip (20) around the bulletproof glass window, wherein, during the individual steps, the lip (20) is held in the intended position by suitable supports and spacers.
